# EUROPÄISCHE PATENTSCHRIFT

(11) **EP 1 758 819 B1**
(45) Veröffentlichungstag und Bekanntmachung des Hinweises auf die Patenterteilung: **05.08.2009**
(21) Anmeldenummer: 05745255.9
(22) Anmeldetag: 10.05.2005
(51) Int. Cl.: C01B 33/02, C01B 33/027, C01B 33/029

(54) **SILIZIUM SOWIE VERFAHREN ZU DESSEN HERSTELLUNG**
SILICON AND METHOD FOR PRODUCING THE SAME
SILICIUM ET PROCEDE DE PRODUCTION ASSOCIE

(30) Priorität: 04.06.2004 DE 102004027563
(43) Veröffentlichungstag der Anmeldung: 07.03.2007
(73) Patentinhaber: JSSi GmbH, 09599 Freiberg (DE)
(72) Erfinder: ADLER, Peter, 79618 Rheinfelden (DE); GÖLZ, Andreas, 79689 Maulburg (DE); KIRCHNER, Holger, 61381 Friedrichsdorf (DE); MÜLLER, Armin, 09599 Freiberg (DE); SILL, Torsten, 09599 Freiberg (DE); SONNENSCHEIN, Raymund, 60594 Frankfurt (DE)
(74) Vertreter: Rau, Albrecht
(86) Internationale Anmeldenummer: PCT/EP2005/005018
(87) Internationale Veröffentlichungsnummer: WO 2005/118474

(56) Entgegenhaltungen:
- WO-A-20/04011372
- US-A- 4 354 987
- US-A- 4 661 335
- US-A- 4 883 687
- SANTANA C J ET AL: "THE EFFECTS OF PROCESSING CONDITIONS ON THE DENSITY AND MICROSTRUCTURE OF HOT-PRESSED SILICON POWDER" JOURNAL OF MATERIALS SCIENCE, CHAPMAN AND HALL LTD. LONDON, GB, Bd. 31, 1996, Seiten 4985-4990, XP000892023 ISSN: 0022-2461

## Beschreibung

Die Erfindung betrifft ein Verfahren zur Herstellung von hochreinem Silizium, nach dem Verfahren hergestelltes Silizium sowie in besonderer Weise aufschmelzbares Silizium.

Verfahren zur Herstellung von hochreinem Silizium sind seit langem bekannt. Das aus diesen Verfahren resultierende Prime Poly Silizium ist auf Grund seines Herstellungsprozesses ein kompaktes Material, das in Form von Stäbchen, annähernd kugelförmigen Granalien oder unregelmäßigen massiven Siliziumstücken zum Einsatz kommt. Diese Materialien haben auf Grund ihrer kompakten Struktur ein sehr gutes Einschmelzverhalten, auf Grund der langsamen thermischen Abscheidung eine hohe Reinheit und auf Grund des großen Volumen/Oberfläche-Verhältnisses nur geringe Oberflächenverunreinigungen, die in die Schmelze eingetragen werden. Nachteilig bei den bestehenden Verfahren sind ein sehr hoher spezifischer Energieverbrauch je Kilogramm Reinsilizium und auf Grund der langsamen Abscheidungsrate die hohen Fertigungskosten.

Bei vielen in der Vergangenheit untersuchten Herstellungsverfahren von Prime Poly Silizium bzw. bei den gegenwärtig industriell genutzten Herstellungsverfahren fällt, insbesondere beim Einsatz von Monosilan, neben dem auf einer heißen Oberfläche abgeschiedenen Silizium hauptsächlich pulverförmiges Silizium in der Gasphase an. Dieses pulverförmige Silizium konnte bisher auf Grund eines hohen Gehalts von Verunreinigungen, schlechter Handhabungseigenschaften und einem schlechten Einschmelzverhalten in der Photovoltaik- und Halbleiterindustrie nicht verwendet werden. Eine gezielte Entwicklung eines geeigneten Verfahrens zur Herstellung von Silizium in Form von Siliziumpulver wird in der Literatur beschrieben. Auf Grund des ungünstigen Einschmelzverhaltens von Siliziumpulver wurde vorgeschlagen, das Siliziumpulver direkt in eine Siliziumschmelze zu überführen und in Form von Siliziumgranalien erstarren zu lassen, um in dieser Form als Ausgangsstoff für die Herstellung von Siliziumblöcken bzw. Siliziumkristallen zu dienen (US 4,354,987).

Aus C. J. SANTANA et al. "The effects of processing conditions on the density and microstructure of hot-pressed silicon powder" Journal of Materials Science, Bd. 31, 1996, S. 4985 ff, ISSN-Nr. 0022-2461 ist ein Verfahren zum Heißpressen von Siliziumpulver in polykristalline Wafer bekannt. Das verwendete Siliziumpulver ist ein Nebenprodukt einer Zusetzung von Monosilan in einer Wirbelschicht bei der Herstellung von Siliziumgranulat. Es werden die Auswirkungen von Temperatur, Druck und des eingesetzten Hilfsgases auf die Dichte des heißgepressten Siliziumpulvers diskutiert.

Aus der US 4,883,687 ist ein Verfahren zur Herstellung von hochreinem Silizium durch Zersetzung von Monosilan in einem Wirbelschichtreaktor bekannt. Bei dieser Zersetzung fällt als Nebenprodukt Siliziumstaub an, der sich auf der Oberfläche größerer Siliziumteilchen ablagert. Dadurch, dass die Siliziumstaub aufweisenden Siliziumteilchen mit einer Mischung von Wasserstoff und Silan in Kontakt gebracht werden, wird der Staub der Oberfläche der größeren Siliziumteilchen fest gebunden.

Aus der US 4,661,335 ist ein Verfahren zum thermischen Zersetzung von Silan in einem Reaktor bekannt, wobei Siliziumpulver mit einer durchschnittlichen Dichte im Bereich von 0,6 bis 0,8 g/cm³ und einer spezifischen Oberfläche im Bereich von 1 bis 2 m²/g erzeugt wird.

Aus der WO 2004/011372 A1 ist ein Verfahren zur Zersetzung eines Siliziumzwischenprodukts, beispielsweise Trichlorsilan oder Silan, in Anwesenheit eines Hilfsgases, beispielsweise Wasserstoff, in einem Reaktor bekannt.

Aus der JP-A-57067019 ist ein Verfahren zur mechanischen Verdichtung von polykristallinem Silizium bekannt, wobei metallische Walzenkörper eine hochreine Siliziumbeschichtung aufweisen.

Der Erfindung liegt die Aufgabe zu Grunde, ein Verfahren zur Herstellung von Silizium zu schaffen, das Energie und Kosten sparend zu einem Reinsilizium führt, das einfach weiterverarbeitet werden kann.

Die Aufgabe wird durch die Merkmale der kennzeichnenden Teile der Ansprüche 1 und 7 gelöst. Der Kern des Herstellungsverfahrens besteht darin, ein Monosilan-Wasserstoff-Gemisch thermisch zu zersetzen und das entstandene Siliziumpulver mechanisch zu verdichten. Dieses Silizium besitzt die Eigenschaft, dass es ohne weiteres später weiterbearbeitbar ist und insbesondere bei Schmelztemperaturen im Bereich der Schmelztemperatur von Silizium aufschmelzbar ist. Das Silizium enthält auf Grund des Herstellungsverfahrens insbesondere keine Siliziumoxidverbindungen auf der Oberfläche der Siliziumteilchen, die die Schmelztemperatur der Siliziumpulvers wesentlich erhöhen würden.

Weitere vorteilhafte Ausgestaltungen der Erfindung ergeben sich aus den Unteransprüchen.

Zusätzliche Merkmale und Einzelheiten der Erfindung werden nachfolgend an Hand zweier Ausführungsbeispiele beschrieben. Es zeigen
- Fig. 1: einen Schnitt einer Anlage zur Herstellung von Silizium mit einer Verdichtungs-Vorrichtung gemäß einem ersten Ausführungsbei- spiel,
- Fig. 2: eine Vergrößerung einer Verdichtungs-Walze der Verdichtungs- Vorrichtung gemäß Fig. 1 und
- Fig. 3: eine Vergrößerung einer Verdichtungs-Walze gemäß einem zwei- ten Ausführungsbeispiel.

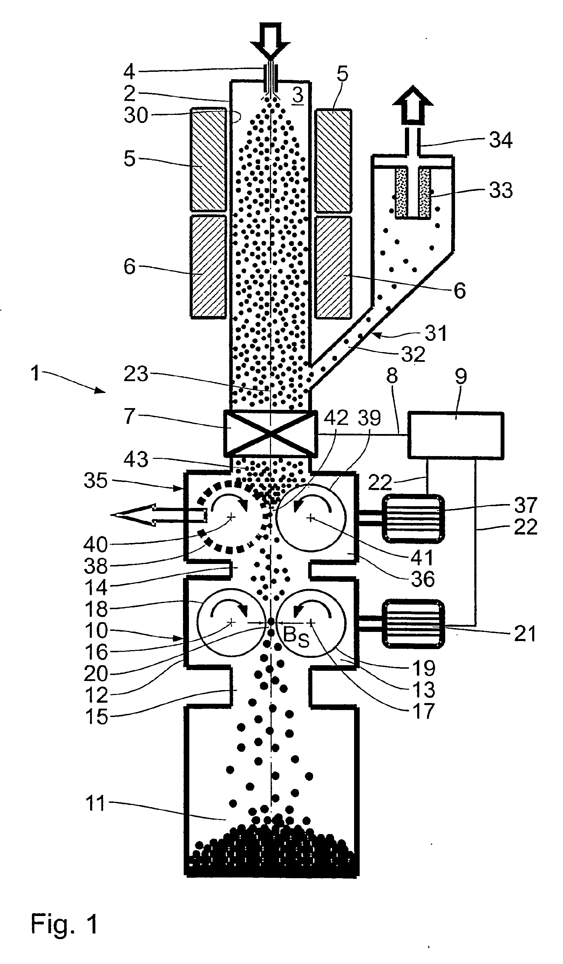

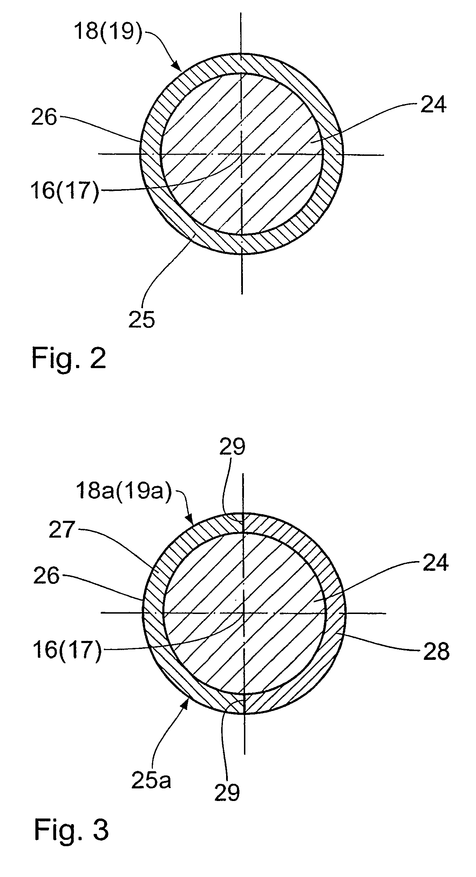

Im Folgenden wird zunächst unter Bezugnahme auf die Fig. 1 und 2 der Aufbau einer Anlage 1 zur Herstellung von Siliziumpulver gemäß einem ersten Ausführungsbeispiel beschrieben. Die Anlage 1 weist beginnend von oben einen rohrförmigen, vertikal verlaufenden Reaktor 2 auf, der eine zylindrische Reaktionskammer 3 umschließt. Am oberen Ende des Reaktors 2 ist eine Gas-Zuführ-Leitung 4 angeordnet, die in die Reaktionskammer 3 mündet. Die Leitung 4 ist so gestaltet, dass in der Mitte ein Nutzgasstrom, beispielsweise aus Monosilan, eingebracht werden kann. Der Nutzgasstrom ist von einem Ringstrom eines Hilfsgases umgeben. Ungefähr die obere Hälfte des Reaktors 2 ist von einer ringzylindrischen Heizung 5 umgeben, die den Reaktor 2 derart umgibt, dass die Wand der Kammer 3 auf Temperaturen von über 800° C erwärmt werden kann. Die untere Hälfte des Reaktors 2 ist von einer ringzylindrischen Kühl-Einrichtung 6 umgeben, die unmittelbar an den Reaktor 2 angrenzt. Unterhalb des Reaktors 2 und mit diesem verbunden befindet sich eine Entgasungs-Einrichtung 31 und eine elektrisch betätigbare Schleuse 7, die über eine Verbindungsleitung 8 mit einer Steuer-Einrichtung 9 verbunden ist. Die Entgasungs-Einrichtung 31 besteht aus einem schräg nach oben verlaufenden, mit der Kammer 3 verbundenen Gehäuse 32, das am unteren Ende des Reaktors 2 angesetzt ist. Am oberen Ende des Gehäuses 32 ist ein ringzylindrischer und unten verschlossener Sinterwerkstofffilter 33 angebracht, durch den überschüssiger Wasserstoff durch eine im oberen Ende des Gehäuses 32 angesetzte Öffnung 34 entweichen kann. Unterhalb der Schleuse 7 befindet sich ein Walzenentlüfter 35 bekannter Bauart und anschließend eine Verdichtungs-Vorrichtung 10, deren Aufbau nachfolgend näher beschrieben wird. Die Verdichtungs-Vorrichtung 10 ist über die Schleuse 7 mit der Reaktionskammer 3 verbunden. Unterhalb der Vorrichtung 10 befindet sich ein mit dieser verbundener Aufbewahrungs-Behälter 11.

Der Walzenentlüfter 35 weist ein quaderförmiges Gehäuse 36 auf, in dem zwei über einen Motor 37 angetriebene Entlüftungswalzen 38, 39 angeordnet sind. Die Walzen 38, 39 sind um zugeordnete, parallel zueinander verlaufende Drehachsen 40, 41 drehbar gelagert. Die Walzen 38, 39 sind gegenläufig angetrieben, sodass sich im Bereich des von den Walzen 38, 39 begrenzten Spaltes 42 beide nach unten bewegen. Die Walze 38 ist hohl und besitzt einen porösen Mantel. Auf ihrer Mantelfläche ist eine gasdurchlässige Kunststofffolie aufgebracht. Innerhalb der Walze 38 befindet sich Unterdruck. Auf diese Weise wird das im Siliziumpulver 43 verbleibende Gas abgezogen. Die Oberfläche der Walze 39 ist glatt. Beide Walzen 38, 39 weisen vorzugsweise eine nicht-metallische Oberfläche auf.

Die Verdichtungs-Vorrichtung 10 weist ein Gehäuse 12 auf, das einen im Wesentlichen kubischen Arbeitsraum 13 umschließt. Das Gehäuse 12 weist eine der Schleuse 7 zugewandte und mit dieser verbundene ZuführÖffnung 14 sowie eine am unteren.Rand des Gehäuses 12 vorgesehene, mit dem Behälter 11 verbundene Abführ-Öffnung 15 auf. In dem Gehäuse 12 befinden sich mittig zwischen den Öffnungen 14 und 15 zwei um jeweilige Drehachsen 16, 17 drehantreibbare Verdichtungs-Walzen 18, 19, die derart benachbart zueinander angeordnet sind, dass zwischen ihnen ein Verdichtungs-Spalt 20 gebildet ist. Die Drehachsen 16 und 17 verlaufen parallel zueinander. Der Verdichtungs-Spalt 20 weist eine Breite B_{S} auf. Die Verdichtungs-Walzen 18, 19 sind über einen Motor 21 drehantreibbar, der über eine Verbindungsleitung 22 mit der Steuer-Einrichtung 9 verbunden ist. Der rohrförmige Reaktor 2 weist eine vertikal verlaufende Mittel-LängsAchse 23 auf, die mittig durch den Spalt 20 verläuft. Die Walzen 18, 19 sind gegenläufig angetrieben, d. h. die Walze 18 dreht sich im Uhrzeigersinn, die Walze 19 entgegen dem Uhrzeigersinn. Hierdurch bewegen sich die Oberflächen der Walzen 18, 19 im Bereich des Spaltes 20 gemeinsam nach unten.

Die Walzen 18, 19 weisen einen aus Stahl bestehenden Walzenkern 24 auf, der kreiszylindrisch geformt ist. Auf dem Walzenkern 24 befindet sich ein im Querschnitt ringförmiger Walzenmantel 25, der den Walzenkern 24 umfangsseitig vollständig umgibt. Der Walzenmantel 25 ist einteilig ausgebildet und besteht aus einem Nicht-Metall-Material, das heißt einem nichtmetallischen Material. Insbesondere handelt es sich hierbei um Glas-, Graphit- oder Keramik-Materialien. Besonders bevorzugt ist Keramik. Die verwendete Keramik besteht insbesondere in wesentlichen Teilen aus Siliziumnitrid. Der Walzenmantel 25 ist auf dem Walzenkern 24 in axialer und tangentialer Richtung festgelegt, beispielsweise durch Kleben oder Nut-Feder-Verbindungen. Der Walzenmantel 25 hat die Form eines Kreisringzylinders. Es ist möglich, die gesamte Walze 18 bzw. 19 aus einem keramischen Werkstoff auszubilden. In diesem Fall fällt die Trennung zwischen einem Walzenkern 24 aus Stahl und einem Walzenmantel 25 aus Keramik weg. Die Ausführungsform gemäß Fig. 2 ist vor allem hinsichtlich der Aufbringung von Drehmomenten auf die Oberfläche 26 des Mantels 25 stabiler und vorteilhafter.

In Fig. 3 ist ein zweites Ausführungsbeispiel dargestellt. Identische Teile erhalten dieselben Bezugszeichen wie bei dem Ausführungsbeispiel gemäß Fig. 2. Konstruktiv unterschiedliche, jedoch funktionell gleichartige Teile erhalten dieselben Bezugszeichen mit einem nachgestellten a. Der wesentliche Unterschied gegenüber dem Ausführungsbeispiel gemäß Fig. 2 besteht darin, dass der Walzenmantel 25a nicht einteilig ausgebildet ist, sondern aus zwei Halbschalen 27, 28 besteht, die den Walzenkern 24 vollständig und lückenlos umschließen. Insbesondere sind die Spalte 29 zwischen den Halbschalen 27 und 28 vollständig und lückenlos geschlossen, sodass Material, das auf die Oberfläche 26 gelangt, nicht mit dem Walzenkern 24 in Verbindung kommt. Die Halbschalen 27, 28 wurden nach der keramischen Fertigung einer exakten mechanischen Bearbeitung unterzogen. Als Teil der mechanischen Bearbeitung wurde die Oberfläche der Halbschalen 27, 28 profiliert. Die Oberfläche der Halbschalen 27, 28 kann auch so gestaltet sein, dass das verdichtete Silizium die Form von Stäbchen, Kissen, Mandeln etc. besitzt. Trotz der hohen auftretenden spezifischen Anpresskräfte hielt die Werkstoffkombination aus Keramik und Metall der Bearbeitung stand. Es ist auch möglich, auf dem Umfang Teilschalen mit einem Zentrumswinkel von < 180° zu verwenden. Insbesondere können auf dem Umfang drei Teilschalen mit einem Zentrumswinkel von 120° oder vier Teilschalen mit einem Zentrumswinkel von 90° vorgesehen sein. Es sind auch andere Aufteilungen möglich.

Im Folgenden wird das Verfahren zur Herstellung von Silizium zunächst an Hand eines Beispiels beschrieben. Ein Gasgemisch aus Monosilan und Wasserstoff im Volumen- bzw. Mol-Verhältnis 1 : 3 wurde in dem Reaktor 2 mit einer Wandtemperatur der Wand 30 von > 800° C und einer Produktionsrate von 200 g Silizium pro Stunde zu Siliziumpulver und Wasserstoff umgesetzt. Die Zugabe erfolgte derart, dass das Monosilan mittig von oben in die Reaktionskammer 3 eingebracht wurde. Der Wasserstoff umgab das Monosilan in Form eines Ringstromes, um zu verhindern, dass sich das Silizium direkt an den Wänden der Reaktionskammer 3 abscheidet. Das Siliziumpulver 43 wurde im Anschluss an die Zersetzung mittels der an der Schleuse 7 angeordneten Entgasungs-Einrichtung 31 teilweise entgast. Das erhaltene Pulver besaß eine Schüttdichte von ca. 50 g/ℓ. In der Reaktionskammer 3 wurde mit einem Überdruck von 200 mbar gegenüber der Umgebung gearbeitet. Auf diese Weise erfolgte die Entgasung in der Entgasungs-Einrichtung 31 gegenüber dem Umgebungsdruck automatisch. Bei dem Siliziumpulver wurde in zwei Schritten mittels des Walzenentlüfters 35 und der Verdichtungs-Vorrichtung 10 die Wasserstoffatmosphäre im Pulver gegen ein Inertgas, z. B. Argon oder Stickstoff, ausgetauscht. Das entlüftete und vorverdichtete Produkt mit einer Schüttdichte von ca. 200 g/dm³ wurde mittels der Verdichtungs-Vorrichtung 10 auf ein Schüttgewicht von 450 g/dm³ verdichtet. 6 kg dieses verdichteten Siliziumpulvers wurden in eine Induktionsschmelzanlage IS30 der Firma Leybold gegeben. Anschließend wurde die Anlage evakuiert. Es wurde eine ArgonAtmosphäre mit einem Druck zwischen 1 und 100 mbar erzeugt. Das Siliziumpulver wurde auf eine Schmelztemperatur von 1415° C aufgeheizt. Anschließend fand ein rückstandsfreies Aufschmelzen des Siliziumpulvers bei 1450° C in 30 Minuten bei einer Schmelzleistung von 70 kW statt. Danach wurde die Siliziumschmelze abgegossen und eine gerichtete Erstarrung des Siliziums bewirkt. Der erstarrte polykristalline Siliziumblock zeigte eine homogene polykristalline Struktur des Siliziums, und keine Rückstände an Siliziumpulver oder siliziumhaltiger Schlacke.

Allgemein gilt für das erfindungsgemäße Verfahren Folgendes: In dem Reaktor kann allgemein ein Silizium enthaltendes Gas zersetzt werden. Beispiele hierfür sind Trichlorsilan oder Monosilan. Es können auch andere Silizium enthaltende Gase verwendet werden. Das Silizium enthaltende Gas wird in den rohrförmigen Reaktor 2 mittig eingebracht und ist hierbei von einem Ringstrom eines Hilfsgases umgeben, damit sich das Silizium enthaltende Gas nicht an den Reaktorwänden direkt abscheidet. Bei dem Hilfsgas kann es sich allgemein um ein inertes Gas handeln. Besonders vorteilhaft ist Wasserstoff, da dieser auch bei der Zersetzung beispielsweise von Monosilan entsteht. Es können jedoch auch Edelgase wie Argon sowie andere Gase, wie z. B. Stickstoff oder Kohlendioxid verwendet werden. Das Gemischverhältnis, d. h. Volumen- bzw. Molverhältnis, von Monosilan zu Wasserstoff kann zwischen 1 : 0 und 1 : 100 liegen. Der spezifische Energiebedarf je 1 kg festem Silizium für die Verfahrensschritte der thermischen Zersetzung und mechanischen Verdichtung lag bei weniger als 20 kWh. Die Raum-Zeit-Ausbeute je rohrförmigem Reaktor 2 lag bei mehr als 1 kg Siliziumpulver pro Stunde. Die Wandtemperatur des Reaktors 2 liegt bei mehr als 400° C, insbesondere mehr als 800° C. Die Verdichtung des Siliziumpulvers kann ein- oder zweistufig, vorteilhafterweise zweistufig, erfolgen. Die Anpresskräfte in der Verdichtungs-Vorrichtung 10 lagen zwischen 5 N/cm und 50 kN/cm.

Von zentraler Bedeutung ist, dass die Verdichtung des Siliziumpulvers in der Vorrichtung 10 metallfrei erfolgt und es somit zu keiner Metall-Verunreinigung des Siliziumpulvers kommt. Das Siliziumpulver kommt ausschließlich mit dem Walzenmantel 25 aus Keramik in Berührung, sodass dies sichergestellt ist.

Das nach dem erfindungsgemäßen Verfahren hergestellte hochreine pulverförmige Silizium besitzt trotz seines pulverförmigen Grundzustandes gute Handhabungseigenschaften und eignet sich zur Herstellung von reinen Siliziumschmelzen, aus welchen Siliziumblöcke oder Siliziumkristalle hergestellt werden können. Es wurde gefunden, dass es bei der definierten Zusammensetzung des aus Wasserstoff und Monosilan bestehenden Pyrolysegases möglich ist, Silizium in Pulverform mit hohen Ausbeuten und sehr niedrigem Energieverbrauch herzustellen. Das Verfahren zeichnet sich besonders dadurch aus, dass das Siliziumpulver nach der Durchführung des Verfahrens separat gehandhabt, verpackt sowie versendet und somit mit zeitlicher Verzögerung für die Herstellung von Siliziumblöcken oder Siliziumkristallen eingesetzt werden kann. Das Silizium zeichnet sich durch ein gutes Einschmelzverhalten und eine hohe Reinheit trotz großer Oberfläche und einem ungünstigen, kleinen Volumen/Oberflächen-Verhältnis im Vergleich zu Prime Poly Silizium aus.

Das durch die thermische Zersetzung erzeugte Siliziumpulver besaß eine Schüttdichte von 10 bis 100 g/dm³. Das durch die Vorrichtung 10 endverdichtete Siliziumpulver besaß eine Schüttdichte von 100 bis 1500 g/dm³, insbesondere von 200 bis 1200 g/dm³, insbesondere von 250 bis 950 g/dm³, insbesondere ca. 450 g/dm³. Das Siliziumpulver enthielt in der Summe nicht mehr als 10¹⁹ Atome an Fremdelementen je 1 cm³ Silizium. Das Siliziumpulver bestand aus kristallinen Teilchen mit einer Primärteilchenkorngröße von 10 nm bis 10000 nm, vorzugsweise 50 nm bis 500 nm, typischerweise ca. 200 nm. Das verdichtete Siliziumpulver bestand aus Aggregaten mit einer Aggregatgröße von 500 nm bis 100000 nm, insbesondere 1000 nm bis 10000 nm, typischerweise ungefähr 4000 nm. Die verdichteten Siliziumstücke aus Siliziumaggregaten besaßen eine größte Ausdehnung von 1 bis 200 mm. Sie besaßen eine unregelmäßige Form, wobei es sich hierbei auch um Stäbchen handeln konnte. Das Siliziumpulver besaß eine Oberfläche von 1 bis 50 m²/g. Das verdichtete Siliziumpulver besaß in der Summe nicht mehr als 10¹⁷ Atome an Übergangsmetallen je 1 cm³ Silizium. Das erfindungsgemäße Siliziumpulver hat eine braune Farbe, wohingegen nach herkömmlichen Verfahren hergestellte SiliziumGranalien grau sind. Das verdichtete Siliziumpulver kann zur Herstellung von polykristallinen Siliziumblöcken für die Photovoltaik oder zur Herstellung von Siliziumeinkristallen verwendet werden. Aus dem erfindungsgemäßen Silizium können Siliziumwafer hergestellt werden. Der Metallgehalt des kompaktierten Siliziumpulvers entsprach dem des Ausgangsprodukts. Es konnten keine Verunreinigungen festgestellt werden. Das Silizium enthielt auf Grund des Herstellungsverfahrens keine Siliziumoxidverbindungen auf der Oberfläche der Siliziumteilchen, die die Schmelztemperatur des Siliziumpulvers wesentlich erhöht hätten.

## Patentansprüche

1. Verfahren zur Herstellung von Silizium, das als Ausgangsstoff zur Herstellung einer Siliziumschmelze für die Fertigung von Siliziumblöcken oder Siliziumkristallen geeignet ist, umfassend die folgenden Schritte:
a. Einbringen eines Gasgemisches aus einem Silizium enthaltenden Gas sowie einem Hilfsgas in einen Reaktor,
b. thermisches Zersetzen des Gasgemisches unter Bildung von Siliziumpulver,
c. Abtrennen des entstandenen Siliziumpulvers von dem Gasgemisch, und
d. mechanisches Verdichten des abgetrennten Siliziumpulvers, **dadurch gekennzeichnet, dass**
e. das mechanische Verdichten mit Verdichtungs-Walzen (18, 19) durchgeführt wird, die zumindest auf dem Walzenmantel (25) aus einem Keramik-Material bestehen.

2. Verfahren gemäß Anspruch 1, **dadurch gekennzeichnet, dass** es sich bei dem Silizium enthaltenden Gas um Monosilan handelt.

3. Verfahren gemäß Anspruch 1 oder 2, **dadurch gekennzeichnet, dass** es sich bei dem Hilfsgas um Wasserstoff handelt.

4. Verfahren gemäß einem der vorangehenden Ansprüche, **dadurch gekennzeichnet, dass** die thermische Zersetzung in einem Rohr-Reaktor mit einer Raum-Zeit-Ausbeute je Rohr-Reaktor (2) von mehr als 1 kg Siliziumpulver pro Stunde durchgeführt wird.

5. Verfahren gemäß einem der vorangehenden Ansprüche, **dadurch gekennzeichnet, dass** der Reaktor (2) bei der thermischen Zersetzung eine Wandtemperatur von mehr als 400° C besitzt.

6. Verwendung von Silizium, das gemäß einem der vorangehenden Ansprüche hergestellt wurde, zur Herstellung von polykristallinen Siliziumblöcken für die Photovoltaik oder von Siliziumeinkristallen.

7. Silizium, **dadurch gekennzeichnet, dass**
a. es in Form eines Pulvers von Siliziumteilchen und/oder eines verdichteten Pulvers von Siliziumteilchen vorliegt,
b. es eine mittlere Schüttdichte von 100 bis 1500 g/dm³ aufweist,
c. es zu einer homogenen Siliziumschmelze bei einer Temperatur von nicht mehr als 1500°C aufschmelzbar ist,
**dadurch gekennzeichnet, dass**
d. das Pulver in der Summe nicht mehr als 200 ppma an Fremdelementen enthält und
e. die Siliziumteilchen des Pulvers eine Teilchengröße von 10 nm bis 10.000 nm aufweisen.

8. Silizium gemäß Anspruch 7, **dadurch gekennzeichnet, dass** das Pulver von Siliziumteilchen eine Oberfläche von 1 bis 50 m²/g besitzt.

## Claims

1. Method for producing silicon which is suitable as a starting material for producing a silicon melt for the fabrication of silicon blocks or silicon crystals, the method comprising the following steps:
a. introduction of a gaseous mixture of a silicon-containing gas and an auxiliary gas into a reactor,
b. thermal degradation of the gaseous mixture with formation of silicon powder,
c. separation of the silicon powder obtained from the gaseous mixture, and
d. mechanical compacting of the separated silicon powder,
**characterized in that**
e. the mechanical compacting is carried out with compacting rollers (18, 19) which consist at least on the roller jacket (25) of a ceramic material.

2. Method according to claim 1, **characterised in that** the silicon-containing gas is monosilane.

3. Method according to claim 1 or 2, **characterised in that** the auxiliary gas is hydrogen.

4. Method according to any one of the preceding claims, **characterised in that** the thermal degradation is carried out in a tube reactor with a space-time yield per tube reactor (2) of more than 1 kg of silicon powder per hour.

5. Method according to any one of the preceding claims, **characterised in that** the reactor (2) possesses during the thermal degradation a wall temperature of more than 400°C.

6. Use of silicon, which was produced according to any one of the preceding claims, to produce polycrystalline silicon blocks for the photovoltaic industry or silicon monocrystals.

7. Silicon, **characterised in that**
a. it is present in the form of a powder of silicon particles and/or of a compressed powder of silicon particles,
b. it has a mean bulk density of 100 to 1500 g/dm³, and
c. it is fusible to a homogeneous silicon melt at a temperature of not more than 1500°C,
**characterized in that**
d. the powder contains in total not more than 200 ppma of foreign elements, and
e. the silicon particles of the powder have a particle size of 10 nm to 10.000 nm.

8. Silicon according to claim 7, **characterised in that** the powder of silicon particles possesses a surface region of 1 to 50 m²/g.

## Revendications

1. Procédé de production de silicium adapté comme matière première pour la production d'une fonte de silicium en vue de la préparation de blocs de silicium ou de cristaux de silicium, comprenant les étapes suivantes :
a. immersion d'un mélange de gaz constitué d'un gaz contenant du silicium et d'un gaz auxiliaire dans un réacteur,
b. décomposition thermique du mélange de gaz sous la formation de poudre de silicium,
c. séparation de la poudre de silicium produite du mélange de gaz, et
d. pressage mécanique de la poudre de silicium séparée,
**caractérisé en ce que**
e. le pressage mécanique est effectué avec des cylindres de pressage (18, 19), constitués d'un matériau céramique au moins sur la paroi des cylindres (25).

2. Procédé selon la revendication 1, **caractérisé en ce que** le gaz contenant du silicium est du monosilane.

3. Procédé selon la revendication 1 ou 2, **caractérisé en ce que** le gaz auxiliaire est de l'hydrogène.

4. Procédé selon l'une quelconque des revendications précédentes, **caractérisé en ce que** la décomposition thermique est effectuée dans un réacteur tubulaire, chaque réacteur tubulaire (2) ayant un rendement espace-temps de plus d'1 kg de poudre de silicium par heure.

5. Procédé selon l'une quelconque des revendications précédentes, **caractérisé en ce que**, lors de la décomposition thermique, le réacteur (2) affiche une température au niveau de la gaine de plus de 400°C.

6. Utilisation de silicium ayant été produit selon l'une des revendications précédentes, pour la production de blocs de silicium polycristallin pour la photovoltaïque ou de monocristaux de silicium.

7. Silicium, **caractérisé en ce que**
a. il se trouve sous la forme d'une poudre de particules de silicium et/ou d'une poudre pressée de particules de silicium,
b. il présente une densité en vrac moyenne de 100 à 1500 g/dm³,
c. il est fusible en une fonte homogène de silicium à une température ne dépassant pas 1500°C,
**caractérisé en ce que**
d. la poudre ne contient en tout pas plus de 200 ppma d'éléments étrangers et
e. les particules de silicium de la poudre présentent une taille de 10 nm à 10 000 nm.

8. Silicium selon la revendication 7, **caractérisé en ce que** la poudre de particules de silicium possède une aire de surface de 1 à 50 m²/g.
